# FASCICULE DE BREVET EUROPEEN

(11) **EP 3 616 906 B1**
(45) Date de publication et mention de la délivrance du brevet: **06.12.2023**
(21) Numéro de dépôt: 19193919.8
(22) Date de dépôt: 27.08.2019
(51) Int. Cl.: B32B 18/00, C04B 35/80, C04B 35/645, C04B 35/18, C04B 35/10, C04B 35/565

(54) **PIÈCE EN COMPOSITE AVEC FACE EXTERNE LISSE ET SON PROCÉDÉ DE FABRICATION**
WERKTEIL AUS VERBUNDMATERIAL MIT EINER GLATTEN AUSSENSEITE, UND SEIN HERSTELLUNGSVERFAHREN
PART MADE FROM COMPOSITE MATERIAL WITH SMOOTH OUTER SURFACE AND METHOD FOR MANUFACTURING SAME

(30) Priorité: 29.08.2018 FR 1857755
(43) Date de publication de la demande: 04.03.2020
(73) Titulaire: Safran Nacelles, 76700 Gonfreville-l'Orcher (FR); Safran Ceramics, 33185 Le Haillan (FR)
(72) Inventeur: DESJOYEAUX, Bertrand, 77550 MOISSY CRAMAYEL (FR); SILVA DE VASCONCELLOS, Davi, 77550 MOISSY CRAMAYEL (FR); PLANCKEEL, Aline, 77550 MOISSY CRAMAYEL (FR)
(74) Mandataire: Germain Maureau

(56) Documents cités:
- EP-A1- 3 075 531
- WO-A1-2010/112768
- JP-A- 2017 057 123
- US-A- 4 936 939
- US-A1- 2004 091 699

## Description

La présente invention concerne une pièce réalisée en matériau composite avec au moins une face externe lisse pour une nacelle de turboréacteur d'aéronef, et notamment comportant une surface aérodynamique, et son procédé de fabrication.

La présente invention concerne par exemple une pièce présentant une forme de révolution, telle qu'une pièce délimitant un conduit de fluide, comme une tuyère d'éjection.

Par face externe lisse, on entend une face externe non rugueuse, sans évidement, creux ou fissuration.

Il est connu de réaliser des pièces en matériau composite à partir de préformes fibreuses et de matrice. Une préforme fibreuse est réalisée en disposant des couches de fibres, appelées également nappes, successives superposées, chaque couche comportant soit des mèches de fibres tissées, on parle alors de tissus fibreux, soit des mèches de fibres disposées sensiblement parallèlement entre elles, dans un outillage comportant au moins une face supérieure et une face inférieure destinée à prendre en sandwich lesdites couches.

Par mèches de fibres, on entend des groupements de fibres.

Dans la suite de la description, les termes outillages et moules seront utilisés indifféremment.

La préforme ainsi obtenue présente des évidements entre les fibres et en surface. De tels évidements sont comblés par une matrice, par exemple injectée dans l'outillage. Une étape de consolidation par traitement thermique permet d'obtenir une pièce en matériau composite.

Cependant, la matrice présente dans les évidements, nommés alors poche de matrice, entraine des départs de fissuration dus au retrait matriciel de la matrice notamment lors de variation de température lors de la consolidation de la matrice par traitement thermique. Ainsi, les performances aérodynamiques et mécaniques de la pièce en matériau composite sont altérées.

La demande de brevet US 2010/0081350 propose de minimiser ce problème, notamment pour les matériaux composites à matrice céramique à base de carbure de silicium ou de bore, en comblant ces évidements par un mélange de matrice et de fibres courtes.

Par fibres courtes on entend des fibres coupées, nommées whiskers ou trichites, d'une longueur telle qu'elles puissent diviser chaque évidement en volumes suffisamment petits, diminuant le retrait dimensionnel de la matrice et ainsi les fissures ou décollements dans le composite.

Un inconvénient de cette solution est que remplir les évidements avec des fibres courtes est difficile et couteux.

En outre, les fibres courtes minimisent le retrait matriciel mais ne l'empêche pas. Ainsi, des fissurations peuvent toujours apparaitre en surface.

Une étape d'usinage par lissage surfacique peut également être réalisée pour lisser la surface de pièces composites de l'art antérieur.

Cette étape présente l'inconvénient d'être couteuse et d'entrainer des ruptures de fibres en surface. US 2004/091699 divulgue une pièce lisse et aérodynamique pour un aéronef.WO 2010/112768 divulgue un procédé pour le lissage de surface d'une pièce en matériau composite à matrice céramique présentant une surface ondulée et rugueuse, caractérisé en ce qu'un revêtement vitreux réfractaire est en outre déposé sur la surface de la pièce.

Un but de l'invention est de proposer des pièces lisses en matériau composite, dont la face externe ne présente pas de fissuration débouchant sur la face externe, et dont le procédé de fabrication est simplifié.

A cet effet, on prévoit selon l'invention une pièce en matériau composite, selon la revendication 1.

On entend par mèche de fibres un groupement de fibres parallèles entre elles.

Les creux entre des mèches de fibres sont des creux à l'échelle macroscopique d'une hauteur comprise entre une à deux fois la hauteur d'une mèche de fibres.

On entend par préforme fibreuse une texture souple visant à obtenir une pièce solide après dispersion de matrice, ajout de mat fibreux selon l'invention, et consolidation.

Par dispersion de matrice, on entend soit un ajout de matrice, par exemple par injection, soit migration de matrice présente dans la préforme dans le cas où celle-ci est préimprégnée de matrice.

La préforme est composée d'une superposition de nappes comportant des mèches de fibres disposées selon différentes orientations. Les mèches de fibres d'une même nappe peuvent être tissées entre elles selon des motifs de tissage 2D ou 3D, et/ou selon des motifs de tressage, et/ou disposées en bandes qui suivent la surface de drapage de la pièce à produire selon tout procédé de drapage, de dépose ou enroulement.

On entend par surface de la préforme, l'enveloppe circonscrite aux mèches de fibres de la préforme. Ladite surface présente des creux, c'est-à-dire des évidements entre ladite enveloppe et les contours des mèches visibles depuis ladite surface.

Par matériau de recouvrement on entend un matériau solide.

On entend par mat fibreux un produit manufacturé constitué d'un voile ou d'une nappe de fibres qu'elles soient réparties directionnellement ou de manière aléatoire, et dont la cohésion interne est assurée par des méthodes mécaniques et/ou physiques et/ou chimiques et/ou par combinaison de ces divers procédés, à l'exclusion du tissage et du tricotage.

Ainsi, le mat fibreux est non tissé.

De cette façon, le mat fibreux couvre les creux de la préforme fibreuse et notamment les creux entre des mèches de surface de la préforme fibreuse, et empêche la création de fissurations matricielles débouchantes à la surface, c'est à dire sur la face externe de la pièce, notamment la création de fissures qui présentent une ouverture sur la face externe de la pièce, telle qu'une crevasse.

La face externe de la pièce en matériau composite ainsi obtenue est lisse, ce qui permet d'obtenir une pièce de meilleur qualité aérodynamique, mécanique et esthétique.

Plus précisément, au moins une fibre du mat fibreux s'étend sensiblement parallèlement à la face externe de la pièce et au-dessus d'au moins un creux entre au moins deux mèches de fibres de la préforme.

Par « au-dessus d'au moins un creux », on entend que le mat fibreux comporte au moins une fibre qui s'étend intégralement au-dessus de la longueur d'un creux, c'est-à-dire une fibre dont la longueur est supérieure à la plus grande dimension du creux, c'est-à-dire à la longueur du creux.

Le mat fibreux comporte au moins une fibre longue, par opposition à des fibres courtes.

La présence de fibres du mat fibreux au-dessus d'un creux entre des mèches de la préforme empêche la création de fissures débouchantes au niveau de ce creux entre les mèches.

Ainsi, la tenue mécanique du matériau est améliorée, et la qualité aérodynamique également.

Dans un mode de réalisation de l'invention, les fibres du mat fibreux sont longues, discontinues et orientées selon des directions aléatoires.

A titre d'exemple, les fibres longues discontinues présentent une longueur de l'ordre de 10 à 100 mm.

Dans un autre mode de réalisation de l'invention, les fibres du mat fibreux sont longues, continues et sont disposées selon des courbes aléatoires dans le plan du mat fibreux.

A titre d'exemple, les fibres longues continues présentent une longueur correspondant à toute la longueur du mat fibreux.

Dans un autre mode de réalisation de l'invention, le mat fibreux est constitué en combinaison de fibres longues discontinues et continues orientées selon des directions et courbes aléatoires dans le plan du mat fibreux.

Selon une caractéristique, l'épaisseur du mat fibreux est inférieure à la moitié de l'épaisseur d'une mèche de fibres de la préforme fibreuse.

Préférentiellement, l'épaisseur du mat fibreux est inférieure au cinquième de l'épaisseur d'une mèche de fibres de la préforme fibreuse.

Avantageusement ainsi, le mat fibreux constitue une couche très mince par rapport à la préforme fibreuse.

Le mat fibreux étant de faible épaisseur, sa faible masse surfacique pénalise peu la masse totale de la pièce en composites.

Selon une autre caractéristique, le mat fibreux peut comporter jusqu'à au moins cinq fibres superposées dans son épaisseur en un point.

Préférentiellement le mat fibreux peut comporter jusqu'à au moins dix fibres superposées dans son épaisseur en un point.

Avantageusement ainsi, le mat fibreux a une structure de fibres très fine tout au long de sa surface alliant, multiples orientations de fibres en un point et faible espacement entre deux fibres.

Avantageusement, la présence de ce mat fibreux sur la face externe de la pièce empêche la création de fissurations importantes de surface, améliore significativement la tenue mécanique de la pièce en matériau composites notamment en fatigue thermomécanique.

Selon un mode de réalisation, la préforme comporte des fibres céramiques, de préférence appartenant aux groupes des carbures, tel que le carbure de silicium (SiC), des borures, des oxydes ou des siliciures.

De préférence encore, les fibres de la préforme sont à base d'alumine (Al₂O₃) ou d'aluminosilicates, et de préférence encore à base d'au moins 60% d'alumine.

Selon ce mode de réalisation, le mat fibreux comporte avantageusement des fibres céramiques, de préférence appartenant aux groupes des carbures, tel que le carbure de silicium, des borures, des oxydes ou des siliciures.

De préférence encore, selon ce mode de réalisation, les fibres du mat fibreux sont à base d'alumine ou d'aluminosilicates, et de préférence à base d'au moins 60% d'alumine.

Toujours selon ce mode de réalisation, la matrice qui lie l'ensemble du matériau de recouvrement et de la préforme fibreuse, est une matrice céramique, de préférence appartenant aux groupes des carbures, tel que le carbure de silicium (SiC), des borures, des oxydes ou des siliciures.

De préférence encore, la matrice est à base d'alumine (Al₂O₃) ou d'aluminosilicates, et de préférence encore à base d'au moins 60% d'alumine.

Selon ce mode de réalisation, on parle de composite à matrice céramique (CMC).

L'invention concerne également un procédé de fabrication d'une pièce telle que décrite précédemment, selon la revendication 6.

On entend par « étape de dispersion de matrice entre les fibres de la préforme et du mat », une étape au cours de laquelle la matrice est ajoutée et/ou migre entre les fibres de la préforme et du mat.

Le mat fibreux est destiné à former le matériau de recouvrement de la préforme.

La matrice est ajoutée entre les fibres de la préforme et du mat par exemple par injection.

La matrice migre entre les fibres de la préforme et du mat par exemple lorsque la préforme fibreuse et/ou le mat sont pré-imprégnés de matrice.

Une combinaison de ces deux alternatives de dispersion de matrice entre les fibres de la préforme et du mat peut également être envisagée.

L'étape de consolidation permet de fournir la cohésion entre les fibres.

Selon un mode de réalisation, l'étape de consolidation est une étape de traitement thermomécanique.

Selon ce mode de réalisation, l'étape de consolidation comporte des phases de séchage et de frittage à des températures allant de 50 à 1500°C.

Dans un mode de réalisation du procédé, au moins une partie de l'étape de dispersion de matrice est réalisée lors de la fabrication de la préforme et/ou préalablement lors d'une étape de fabrication du mat.

Selon ce mode de réalisation, la préforme fibreuse et/ou le mat sont préimprégnés de matrice en solution liquide ou pâteux dispersée entre les fibres.

Dans un autre mode de réalisation, l'étape de dispersion de matrice est réalisée dans le moule, par infiltration liquide ou solide, après dépose de la préforme et du mat.

Dans un autre mode de réalisation du procédé, au moins une partie de l'étape de dispersion de matrice est réalisée par injection de matrice dans le moule comportant la préforme fibreuse et le mat fibreux.

Selon ce mode de réalisation, l'injection est effectuée par un point d'apport situé de préférence dans une face du moule, ledit moule comportant au moins un évent de sortie situé de préférence dans la face opposée du moule, permettant l'évacuation des gaz, des solvants, ou liquides liants.

En variante, le au moins un évent est disposé sur la face du moule au contact du mat fibreux.

Selon ce mode de réalisation, la préforme fibreuse est une préforme fibreuse sèche et le mat est un mat fibreux sec.

Le mat fibreux sec comporte une faible proportion de liant pour lier les fibres.

Avantageusement le liant du mat fibreux est soluble par le liant de la matrice ou par un autre solvant compatible de l'environnement d'outillage.

Dans un premier mode de réalisation, l'étape de fabrication de la préforme fibreuse est effectuée dans le moule.

L'étape de fabrication de la préforme est réalisée par dépose de nappes de mèches de fibres, tissées ou non, en superposition sur une des faces du moule, de manière automatique ou manuelle.

Selon ce premier mode de réalisation, le mat fibreux est déposé sur la préforme, lors de l'étape de dépose, de manière automatique ou manuelle.

Dans un deuxième mode de réalisation, le mat fibreux est déposé sur au moins une des faces du moule, de manière automatique ou manuelle.

Selon ce deuxième mode de réalisation, l'étape de fabrication de la préforme fibreuse est réalisée dans le moule, sur ce mat fibreux, de manière automatique ou manuelle.

Dans la variante selon laquelle le mat fibreux est déposé sur une seule des deux faces du moule, l'étape de dépose du mat fibreux est répétée, dans le moule, soit sur la préforme fibreuse, soit sur l'autre face du moule, de manière automatique ou manuelle.

Selon cette variante, un mat fibreux couvre chacune des deux faces opposées de la préforme fibreuse permettant de couvrir les creux entre fibres de chaque face de ladite préforme.

Dans une variante, le mat fibreux est déposé uniquement sur les creux entre des mèches de fibres de la préforme.

Dans une autre variante le mat fibreux est déposé sur l'ensemble de la préforme y compris dans les zones sans creux entre des mèches de la préforme.

Selon une caractéristique, les deux faces du moule sont en matériau rigide tel qu'un matériau métallique solide, ou en matériau semi-rigide déformable tel qu'un matériau élastomère, ou une combinaison de ces deux types de matériaux.

Dans un mode de réalisation préféré, le moule comporte des moyens qui forcent la répartition de la matrice dans la préforme et le mat fibreux.

Selon une caractéristique, ces moyens sont une pièce en matériau poreux.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe de la pièce en matériau composite selon l'invention ;
- la figure 2 est une vue schématique en coupe d'une variante d'une pièce en matériau composite selon l'invention ;
- la figure 3 est une représentation schématique du procédé selon l'invention ;
- la figure 4 est une vue schématique en coupe de la pièce en matériau composite selon l'invention disposée dans le moule ;
- la figure 5 est une vue schématique en coupe d'une variante de la pièce en matériau composite de la figure 1 ;
- la figure 6 est une vue schématique en perspective d'une nacelle intégrant une pièce en matériau composite selon l'invention.

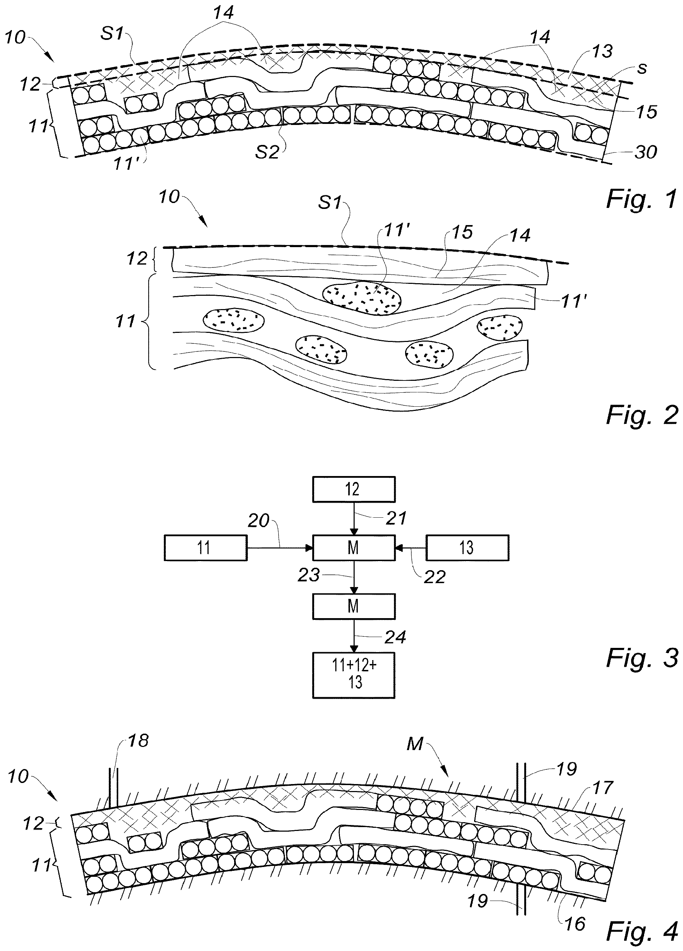

La figure 1 représente une pièce 10 en matériau composite, présentant une face externe S1 lisse, et une face interne S2.

La pièce 10 comporte une préforme fibreuse 11, un mat fibreux 12, une matrice céramique 13 à base d'alumine, qui lie l'ensemble du mat fibreux 12 et de la préforme fibreuse 11.

La préforme fibreuse 11 comporte quatre nappes 30 de fibres regroupées sous forme de mèches 11' de fibres.

Ces mèches comportent chacune une multitude de filaments de fibres (non représentés) disposés parallèlement entre eux.

Les mèches 11' d'une même nappe 30 ont des directions diverses dans le plan de face externe S1.

Dans le plan de la section de la figure 1 certaines mèches 11' sont parallèles au plan de coupe (mèches représentées par formes serpentins) et d'autres sont sécantes (mèches représentées par des ronds ou ellipses).

La préforme fibreuse 11 présente une surface « s » délimitant des creux 14 entre certaines mèches 11'.

Le mat fibreux 12 comporte des fibres 15. Il recouvre la surface « s » de la préforme 11 et notamment les creux 14.

Du fait des orientations et dispositions de mèches 11' et de la rigidité des fibres qui les empêche de se déformer sans risquer de se casser, les creux 14 ont une largeur maximale correspondant à la largeur de deux mèches, et une profondeur correspondant à l'épaisseur d'une à trois nappes 30 de mèches 11'.

Le mat fibreux présente une épaisseur maximale de la moitié de l'épaisseur d'une nappe 30 de la préforme 11, et de préférence du tiers de l'épaisseur d'une nappe 30 de la préforme 11 et de préférence encore du cinquième de l'épaisseur d'une nappe 30 de la préforme 11.

Le mat fibreux 12 comporte des fibres 15 disposées de manière aléatoire et liées entre elles par tous moyens mécanique, physique et ou chimique, mais non tissées ou tricotées.

A titre d'exemple, la pièce 10 est réalisée en matériau composite à matrice en céramique d'oxydes d'aluminium et dont les fibres de la préforme 11 et du mat fibreux 12 sont des fibres d'alumine, de préférence comportant au moins 60% d'alumine, regroupées en mèches 11' de masse linéique comprise entre 3000 à 20000 deniers. La largeur de chaque fibre est généralement inférieure à 20 µm et préférentiellement comprise entre 10 et 15 µm.

Selon cet exemple, la section enveloppe des mèches 11' de fibres de la préforme est sensiblement ovale ou ellipsoïdale de plus grande largeur comprise entre 2 mm et 15 mm.

Une nappe 30 de mèches 11' composée de fibres à base d'alumine de densité entre 3,2 et 3,9, et d'un taux volumique de fibre de l'ordre de 50%, a une masse surfacique comprise entre 80 g/m² et 250 g/m² et une épaisseur comprise entre 0,08 et 0,3 mm.

Dans le cas de mèches 11' tissées, une nappe de mèches tissées de la préforme 11 peut avoir une épaisseur comprise entre 0,15 et 0,4 mm.

Les creux 14 ont une largeur maximum de l'ordre de 1 à 30 mm de largeur et de l'ordre de 0,1 mm à 1 mm de profondeur.

Toujours selon cet exemple, le mat fibreux 12 a une masse surfacique comprise entre 10 et 70 g/m² de fibres d'alumines et préférentiellement une masse surfacique entre 15 et 50 g/m²; et une épaisseur comprise entre 0,02 et 0,3 mm, préférentiellement entre 0,03 et 0,15 mm.

Dans une variante représentée à la figure 2, les fibres 15 du mat fibreux 12 sont des fibres longues disposées dans des plans parallèles à la face externe S1 de la pièce 10.

En outre, les fibres 15 du mat fibreux 12 s'étendent au-dessus d'au moins deux mèches 11' de la préforme, recouvrant au moins un creux 14.

Le mat fibreux 12 comporte au moins une fibre 15 dont la longueur est supérieure à la plus grande largeur des creux 14 entre les mèches 11' de la préforme 11.

Au moins une partie des fibres 15 du mat fibreux 12 a une longueur supérieure à entre 2 et 30 mm.

Préférentiellement le mat fibreux 12 est réalisé à partir de mèches de fibres de masse linéique initiale comprise entre 1000 et 20 000 deniers. Les mèches sont étalées, de façon à distribuer leurs fibres constitutives pour ne pas avoir d'amas de plus 100 fibres parallèle entre elles, soit moins de 100 deniers.

Les mèches peuvent également être coupées de façon à présenter des longueurs de fibres de 15 mm de long.

Préférentiellement, le mat fibreux 12 comporte au moins 50 % de masse totale constituée de fibres de longueurs supérieurs à 15 mm.

Préférentiellement encore, le mat fibreux 12 comporte plus de 50% de fibres de longueurs comprises entre 15 et 50 mm.

Les fibres 15 du mat fibreux 12 sont orientées aléatoirement dans de multiples directions dans le plan du mat fibreux, et distribuées de façon que : en toute surface de 5 mm² du mat fibreux, on puisse observer au moins cinq amas de fibres selon des directions distinctes.

Préférentiellement, les fibres 15 sont réparties et croisées entre elles dans le mat fibreux 12 de façon à ce qu'il n'y ait pas d'espace entre des fibres de longueur supérieur à 2 mm et de largeur supérieure à 1 mm.

Dans un mode de réalisation préféré, les fibres du mat fibreux sont liées entre elles par un produit soluble à l'eau, par exemple à base d'alcool de polyvinyl ou de polyéthylène glycol.

La figure 3 illustre un mode de réalisation du procédé de fabrication de la pièce 10 telle que décrite précédemment, dans lequel la première étape est une étape de fabrication 20 de la préforme fibreuse 11, par dépose de nappes 11' de fibres dans un moule M comportant une première face 16 et une deuxième face 17 (figure 4).

Lors de cette étape de fabrication 20 de la préforme, les nappes 11' sont déposées sur la première face 16 du moule (figure 4)

La première face16 et la deuxième face 17 présentent des formes complémentaires.

Puis on réalise une étape de dépose 21 d'un mat fibreux 12 sur ladite préforme 11 et on ferme le moule M de sorte que la première face 16 et la deuxième face 17 emprisonnent le mat fibreux 12 et la préforme 11.

Ensuite on effectue une étape d'injection 22, dans laquelle on injecte la matrice céramique 13 en solution dans un liant, dans le moule M de sorte à remplir les creux 14.

Cette étape d'injection 22 est suivie d'une étape de consolidation 23 de l'ensemble formé par la préforme 11, le mat fibreux 12 et la matrice 13, par traitement thermomécanique.

L'étape de consolidation 23 est réalisée dans le moule M.

En variante, l'étape de consolidation est réalisée après démoulage.

Dans l'exemple d'une pièce en composite à matrice céramique à base d'oxydes d'alumines, le traitement thermomécanique comporte une étape de séchage de la matrice et élimination de produits liants et résidus organiques par étuvage de l'ensemble formé par la préforme 11, le mat fibreux 12 et la matrice 13, entre 30°C et 500°C pendant 0,2 à 150h.

Le traitement thermomécanique comporte ensuite une étape de frittage 24 au moins partiel de la matrice par traitement thermique entre 1000°C et 1400°C, pendant 5 à 60 minutes afin de générer des liaisons entre chaque grain de la matrice, et entre la matrice et les fibres de la préforme fibreuse et du mat fibreux.

Dans une variante non représentée, le mat fibreux 12 est au préalable pré imprégné de matrice 13 avant l'étape 21 de dépose sur la préforme 11.

Dans une variante non représentée, on peut draper localement deux mats fibreux 12 superposés, pour assurer la couverture complète de la préforme 11 sur des formes non développables qui ne peuvent être couvertes d'un seul tenant de mat fibreux 12.

Dans une autre variante, le mat fibreux 12 est réalisé par projection de fibres coupées 15 avec du liant préférentiellement aqueux, directement sur le moule M ou sur la préforme 11.

La première face 16 ou la deuxième face 17 du moule est une bâche semi-rigide.

Dans un autre mode de réalisation du procédé, la première étape est une étape de dépose (21) du mat fibreux sur la première face 16 du moule M puis la préforme 11 est fabriquée par dépose de nappes 11' de fibres sur le mat fibreux 12.

Comme illustré sur la figure 4, la troisième étape 22 est effectuée par introduction de matrice et son liant par un point d'apport 18 situé sur la deuxième face 17du moule M.

En outre, la deuxième face 17 du moule M comporte au moins un évent 19 permettant la sortie de gaz, solvants, ou liquides liants, de façon à plaquer le mat fibreux 12 contre la deuxième face 17.

Par ailleurs, la première face 16 du moule M comporte au moins un évent 19 permettant la sortie de gaz, solvants, ou liquides liants, de façon à plaquer le mat fibreux 12 contre la deuxième face 17, et permettant la circulation de matrice entre les fibres du mat fibreux 12 et de la préforme 11.

Dans un mode préféré de ce procédé, les évents 19 sont des micro perforations sur l'ensemble des faces du moule M qui permettent de plaquer uniformément le mat fibreux 12 sur la deuxième face 17.

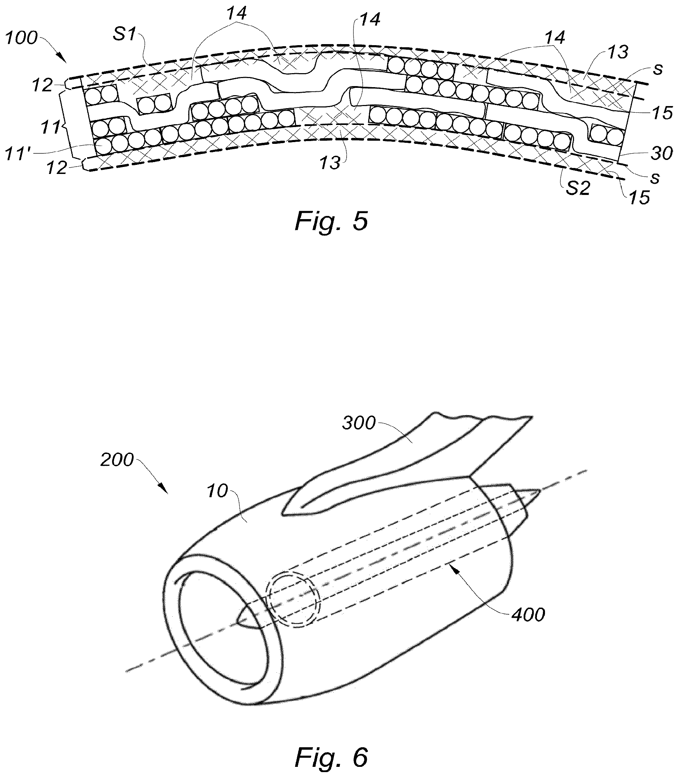

La figure 5 illustre une variante 100 de la pièce en matériau composite, présentant une face externe S1 et une face interne S2 lisses.

La pièce 100 comporte une préforme fibreuse 11, un mat fibreux 12, et une matrice céramique 13 à base d'alumine, qui lie l'ensemble du mat fibreux 12 et de la préforme fibreuse 11, le mat fibreux 12 recouvrant les deux faces de la préforme 11.

La préforme fibreuse 11 présente une surface « s », sur chacune de ses faces, délimitant des creux 14 entre certaines mèches 11' de fibres.

Le mat fibreux 12 comporte des fibres 15. Il recouvre la surface « s » de la préforme 11 et notamment les creux 14, sur chaque face de la préforme 11.

Les autres caractéristiques de la pièce 10 en matériau composite, décrite au regard de la figure 1, sont applicables à la pièce 100 selon la variante de la figure 5.

La figure 6 illustre une nacelle 200 pour turboréacteur 400, comportant une pièce 10 en matériau composite selon l'invention, telle que décrite précédemment.

Le turboréacteur 400 est relié à un aéronef (non représenté) par un mât 300.

Dans une variante non représentée, la nacelle 200 comporte une pièce 100 en matériau composite telle que décrite au regard de la figure 5.

## Revendications

1. Pièce (10) en matériau composite, présentant au moins une face externe (S1), pour nacelle de turboréacteur d'aéronef, comportant :
- une préforme fibreuse (11) comportant des mèches (11') de fibres et présentant une surface (s) délimitant des creux (14) entre des mèches (11') de fibres, les creux étant des creux à échelle macroscopique d'une hauteur comprise entre une à deux fois la hauteur d'une mèche de fibres,
- un matériau de recouvrement (12) qui couvre au moins en partie la surface (s) de la préforme (11) et notamment les creux (14),
- une matrice (13) qui lie l'ensemble du matériau de recouvrement (12) et de la préforme fibreuse (11),
**caractérisée en ce que** le matériau de recouvrement (12) est un mat fibreux non-tissé (12) comportant au moins une fibre (15) s'étendant sensiblement parallèlement à la face externe (S1) de la pièce (10) et au-dessus d'au moins un creux (14) entre au moins deux mèches (11') de fibres de la préforme (11), et la face externe (S1) est lisse.

2. Pièce en matériau composite selon la revendication précédente, dans laquelle l'épaisseur du mat fibreux (12) est inférieure à la moitié de l'épaisseur des mèches (11') de fibres de la préforme fibreuse (11), et de préférence inférieure au cinquième de l'épaisseur des mèches (11') de la préforme fibreuse (11).

3. Pièce en matériau composite selon l'une quelconque des revendications précédentes, dans laquelle la préforme (11) comporte des fibres céramiques, de préférence appartenant aux groupes des carbures, tel que le carbure de silicium (SiC), des borures, des oxydes ou des siliciures, de préférence encore des fibres à base d'alumine ou d'aluminosilicates, et de préférence encore des fibres à base d'au moins 60% d'alumine.

4. Pièce en matériau composite selon l'une quelconque des revendications précédentes, dans laquelle la matrice (13) est une matrice céramique, de préférence appartenant aux groupes des carbures, tel que le carbure de silicium (SiC), des borures, des oxydes ou des siliciures, de préférence encore la matrice (13) est à base d'alumine ou d'aluminosilicates, et de préférence encore la matrice (13) est à base d'au moins 60% d'alumine

5. Pièce en matériau composite selon l'une quelconque des revendications précédentes, dans laquelle le mat fibreux (12) comporte des fibres (15) céramiques, de préférence appartenant aux groupes des carbures, tel que le carbure de silicium (SiC), des borures, des oxydes ou des siliciures, de préférence encore des fibres à base d'alumine, et de préférence encore des fibres à base d'au moins 60% d'alumine.

6. Procédé de fabrication d'une pièce (10) selon l'une quelconque des revendications précédentes, présentant au moins une face externe (S1), le procédé comportant :
- une étape de fabrication (20) d'une préforme fibreuse (11) comportant des mèches (11') de fibres et présentant une surface (s) délimitant des creux (14) entre des mèches (11') de fibres,
- une étape de fourniture d'un mat fibreux non-tissé (12),
- une étape de dépose (21) de la préforme fibreuse (11) et du mat fibreux (12) entre deux faces (16, 17) d'un moule (M), de sorte que le mat fibreux comporte au moins une fibre (15) s'étendant sensiblement parallèlement à la face externe (S1) de la pièce et au-dessus d'au moins un creux (14) entre au moins deux mèches de fibres de la préforme, afin d'obtenir une pièce présentant une surface externe lisse,
- une étape de dispersion (22) de matrice (13) entre les fibres de la préforme (11) et du mat (12),
- une étape de consolidation (23) de la préforme (11) et du mat fibreux (12), dans laquelle la matrice (13) dispersée entre les fibres de la préforme (11) et du mat fibreux (12) est traitée thermiquement.

7. Procédé selon la revendication précédente, dans lequel l'étape de fabrication (20) de la préforme fibreuse (11) est effectuée dans le moule (M), et le mat fibreux (12) est déposé sur la préforme (11), lors de l'étape de dépose (21), de manière automatique ou manuelle.

8. Procédé selon la revendication 6, dans lequel le mat fibreux (12) est déposé sur une des faces (16) du moule (M), de manière automatique ou manuelle, puis l'étape de fabrication (20) de la préforme (11) est réalisée dans le moule (M), sur ce mat fibreux (12), de manière automatique ou manuelle.

9. Procédé selon la revendication précédente dans lequel l'étape de dépose du mat fibreux (12) est répétée dans le moule (M), sur la préforme (11), de manière automatique ou manuelle, de sorte que le mat fibreux (12) soit présent sur les deux faces de la préforme (11).

10. Procédé selon l'une des revendications 6 à 9 dans lequel l'étape de fourniture du mat fibreux (21) est réalisée par projection de fibres coupées sur le moule (M) et/ou sur la préforme (11).

11. Procédé selon l'une quelconque des revendications 6 à 10, dans lequel l'étape de consolidation comporte une étape de traitement thermomécanique.

## Patentansprüche

1. Bauteil (10) aus Verbundmaterial, das mindestens eine Außenfläche (S1) aufweist, für die Gondel eines Flugzeug-Turbostrahltriebwerks, Folgendes umfassend:
- eine faserige Vorform (11), die Faserstränge (11') umfasst und eine Oberfläche (s) aufweist, die Vertiefungen (14) zwischen den Fasersträngen (11') definiert, wobei die Vertiefungen Vertiefungen auf makroskopischer Ebene mit einer Höhe, die zwischen dem Ein- und Zweifachen der Höhe der Faserstränge beträgt, sind;
- ein Abdeckmaterial (12), das mindestens einen Teil der Oberfläche (s) der Vorform (11) und insbesondere die Vertiefungen (14) bedeckt; und
- eine Matrix (13), die das gesamte Abdeckmaterial (12) mit der faserigen Vorform (11) verbindet,
**dadurch gekennzeichnet, dass** das Abdeckmaterial (12) eine nicht gewebte Fasermatte (12) ist, die mindestens eine Faser (15) enthält, die sich im Wesentlichen parallel zur Außenfläche (S1) des Bauteils (10) und über mindestens eine Vertiefung (14) zwischen mindestens zwei Fasersträngen (11') der Vorform (11) erstreckt, und die Außenfläche (S1) glatt ist.

2. Bauteil aus Verbundmaterial nach dem vorhergehenden Anspruch, wobei die Dicke der Fasermatte (12) kleiner als die Hälfte der Dicke der Faserstränge (11') der faserigen Vorform (11) und vorzugsweise kleiner als ein Fünftel der Dicke der Stränge (11') der faserigen Vorform (11) ist.

3. Bauteil aus Verbundmaterial nach einem der vorhergehenden Ansprüche, wobei die Vorform (11) Keramikfasern, die vorzugsweise aus den Gruppen der Carbide, wie Siliciumcarbid (SiC), Boride, Oxide oder Silizide, stammt, noch bevorzugter Fasern auf Basis von Aluminiumoxid oder Aluminosilikaten und noch bevorzugter Fasern auf Basis von mindestens 60 % Aluminiumoxid enthält.

4. Bauteil aus Verbundmaterial nach einem der vorhergehenden Ansprüche, wobei die Matrix (13) eine keramische Matrix ist, die vorzugsweise aus den Gruppen der Carbide, wie Siliciumcarbid (SiC), Boride, Oxide oder Silizide, stammt, die Matrix (13) noch bevorzugter auf Basis von Aluminiumoxid oder Aluminosilikaten ist und die Matrix (13) noch bevorzugter auf Basis von mindestens 60 % Aluminiumoxid ist.

5. Bauteil aus Verbundmaterial nach einem der vorhergehenden Ansprüche, wobei die Fasermatte (12) Keramikfasern (15), die vorzugsweise aus den Gruppen der Carbide, wie Siliciumcarbid (SiC), Boride, Oxide oder Silizide, stammt, noch bevorzugter Fasern auf Basis von Aluminiumoxid und noch bevorzugter Fasern auf Basis von mindestens 60 % Aluminiumoxid enthält.

6. Verfahren zum Herstellen eines Bauteils (10) nach einem der vorhergehenden Ansprüche, aufweisend mindestens eine Außenfläche (S1), wobei das Verfahren Folgendes umfasst:
- einen Schritt des Herstellens (20) einer faserigen Vorform (11), die Faserstränge (11') umfasst und eine Oberfläche (s) aufweist, die Vertiefungen (14) zwischen den Fasersträngen (11') definiert,
- einen Schritt des Bereitstellens der nicht gewebten Fasermatte (12),
- einen Schritt des Ablegens (21) der faserigen Vorform (11) und der Fasermatte (12) zwischen zwei Seiten (16, 17) einer Form (M), so dass die Fasermatte mindestens eine Faser (15) enthält, die sich im Wesentlichen parallel zur Außenfläche (S1) des Bauteils und über mindestens eine Vertiefung (14) zwischen mindestens zwei Fasersträngen der Vorform, um ein Bauteil zu erhalten, das eine glatte Außenfläche aufweist,
- einen Schritt des Verteilens (22) der Matrix (13) zwischen den Fasern der Vorform (11) und der Matte (12),
- einen Schritt des Verfestigens (23) der Vorform (11) und der Fasermatte (12), wobei die Matrix (13), die zwischen den Fasern der Vorform (11) und der Fasermatte (12) verteilt ist, wärmebehandelt wird.

7. Verfahren nach dem vorhergehenden Anspruch, wobei der Schritt des Herstellens (20) der faserigen Vorform (11) in der Form (M) durchgeführt wird und die Fasermatte (12) beim Schritt des Ablegens (21) auf der Vorform (11) automatisch oder manuell abgelegt wird.

8. Verfahren nach Anspruch 6, wobei die Fasermatte (12) auf mindestens einer der Seiten (16) der Form (M) automatisch oder manuell abgelegt wird, nachdem der Schritt des Herstellens (20) der Vorform (11) in der Form (M) auf dieser Fasermatte (12) automatisch oder manuell durchgeführt wurde.

9. Verfahren nach dem vorhergehenden Anspruch, wobei der Schritt des Ablegens der Fasermatte (12) in der Form (M) auf der Vorform (11) automatisch oder manuell wiederholt wird, so dass sich die Fasermatte (12) auf beiden Seiten der Vorform (11) befindet.

10. Verfahren nach einem der Ansprüche 6 bis 9, wobei der Schritt des Bereitstellens der Fasermatte (21) durch Verstreuen geschnittener Fasern auf der Form (M) und/oder der Vorform (11) durchgeführt wird.

11. Verfahren nach einem der Ansprüche 6 bis 10, wobei der Schritt des Verfestigens einen Schritt des Wärmebehandelns umfasst.

## Claims

1. A part (10) made of a composite material, having at least one outer face (S1), for an aircraft turbojet engine nacelle, including:
- a fibrous preform (11) including fiber rovings (11') and having a surface (s) delimiting depressions (14) between fiber rovings (11'), the depressions being depressions on a macroscopic scale with a height comprised between one and two times the height of a fiber roving,
- a covering material (12) which at least partially covers the surface (s) of the preform (11) and in particular the depressions (14),
- a matrix (13) which binds entirely the covering material (12) and the fibrous preform (11),
**characterized in that** the covering material (12) is an unwoven fibrous mat (12) including at least one fiber (15) extending substantially parallel to the outer face (S1) of the part (10) and above at least one depression (14) between at least two fiber rovings (11') of the preform (11), and wherein the outer face (S1) is smooth.

2. The part made of a composite material according to the preceding claim, wherein the thickness of the fibrous mat (12) is smaller than half the thickness of the fiber rovings (11') of the fibrous preform (11), and preferably smaller than one fifth of the thickness of the rovings (11') of the fibrous preform (11).

3. The part made of a composite material according any one of the preceding claims, wherein the preform (11) includes ceramic fibers, preferably belonging to the groups of carbides, such as silicon carbide (SiC), borides, oxides or silicides, even preferably alumina or aluminosilicates-based fibers, and even preferably 60% alumina-based fibers.

4. The part made of a composite material according to any one of the preceding claims, wherein the matrix (13) is a ceramic matrix, preferably belonging to the groups of carbides, such as silicon carbide (SiC), borides, oxides or silicides, even preferably the matrix (13) is an alumina or aluminosilicates-based matrix, and even preferably the matrix (13) is an at least 60% alumina-based matrix.

5. The part made of a composite material according to any one of the preceding claims, wherein the fibrous mat (12) includes ceramic fibers (15), preferably belonging to the groups of carbides, such as silicon carbide (SiC), borides, oxides or silicides, even preferably alumina-based fibers and even preferably 60% alumina-based fibers.

6. A method for manufacturing a part (10) according to any one of the preceding claims, having at least an outer face (S1), the method including:
- a step of manufacturing (20) a fibrous preform (11) including fiber rovings (11') and having a surface (s) delimiting depressions (14) between fiber rovings (11'),
- a step of providing an unwoven fibrous mat (12),
- a step of depositing (21) the fibrous preform (11) and the fibrous mat (12) between two faces (16, 17) of a mold (M), so that the fibrous mat includes at least one fiber (15) extending substantially parallel to the outer face (S1) of the part and above at least one depression (14) between at least two fiber rovings (11') of the preform, in order to obtain a part having a smooth outer surface,
- a step of dispersing (22) the matrix (13) between the fibers of the preform (11) and of the mat (12),
- a step of consolidating (23) the preform (11) and the fibrous mat (12), wherein the matrix (13) dispersed between the fibers of the preform (11) and of the fibrous mat (12) is heat-treated.

7. The manufacturing method according to the preceding claim, wherein the step of manufacturing (20) the fibrous preform (11) is performed in the mold (M), and the fibrous mat (12) is automatically or manually deposited on the preform (11), during the depositing step (21).

8. The manufacturing method according to claim 6, wherein the fibrous mat (12) is automatically or manually deposited on one of the faces (16) of the mold (M), then the step of manufacturing (20) the preform (11) is automatically or manually carried out in the mold (M), on this fibrous mat (12).

9. The manufacturing method according to the preceding claim, wherein the step of depositing the fibrous mat (12) is automatically or manually repeated in the mold (M), on the fibrous preform (11), so that the fibrous mat (12) is on both faces of the preform (11).

10. The manufacturing method according to any of claims 6 and 9 wherein the step of providing the fibrous mat (21) is carried out by scattering cut fibers on the mold (M) and/or on the fibrous preform (11).

11. The manufacturing method according to any one of claims 6 to 10, wherein the consolidation step includes a thermomechanical treatment step.
